# EUROPÄISCHE PATENTSCHRIFT

(11) **EP 1 983 170 B1**
(45) Veröffentlichungstag und Bekanntmachung des Hinweises auf die Patenterteilung: **11.05.2016**
(21) Anmeldenummer: 08004877.0
(22) Anmeldetag: 14.03.2008
(51) Int. Cl.: F02B 29/04

(54) **Verfahren zum Betreiben eines Kältemittelkreislaufs mit einem Ladeluft/Kältemittel-Verdampfer**
Method for operating a coolant circuit with a charge air/coolant vaporiser
Procédé de fonctionnement d'un circuit d'agent de refroidissement doté d'un évaporateur d'air de suralimentation/agent de refroidissement

(30) Priorität: 17.04.2007 DE 102007018428
(43) Veröffentlichungstag der Anmeldung: 22.10.2008
(73) Patentinhaber: MAHLE Behr GmbH & Co. KG, 70469 Stuttgart (DE)
(72) Erfinder: Strauß, Thomas, 73274 Notzingen (DE)
(74) Vertreter: Grauel, Andreas

(56) Entgegenhaltungen:
- EP-A2- 1 342 893
- DE-A1- 4 201 035
- US-A1- 2005 121 006

## Beschreibung

Die Erfindung betrifft ein Verfahren zum Betreiben eines Kältemittelkreislaufs mit einem Ladeluft/Kältemittel-Verdampfer gemäß dem Oberbegriff des Anspruches 1.

Aus der DE 32 00 764 C2 ist eine Ladeluft-Kühleinrichtung für einen Verbrennungsmotor mit Turbolader bekannt. Hierbei ist ein von einem Kompressor umgewälzter Kältemittelkreislauf vorgesehen, der sich bereichsweise in zwei Zweige verzweigt, wobei in einem der Zweige ein Verdampfer für die Ladeluft und im anderen Zweig ein Verdampfer für die dem Fahrzeuginnenraum zuzuführende Luft vorgesehen ist. Die Regelung der Durchströmung des der Ladeluft zugeordneten Verdampfers erfolgt mittels eines über eine Steuereinheit geregelten Magnetventils. Für die Regelung desselben wird beispielsweise die Gaspedalstellung oder die Öffnung der Drosselklappe im Ladeluftstrom ermittelt, um den Kühlbedarf der Ladeluft zu ermitteln. Ein weiteres Beispiel für eine andere Ladeluftkühleinrichtung ist aus der EP-1342 873 bekannt.

Ausgehend von diesem Stand der Technik ist es Aufgabe der Erfindung, ein Verfahren zur Regelung eines derartigen Kältemittelkreislaufs zu verbessem.

Diese Aufgabe wird gelöst durch ein Verfahren mit den Merkmalen des Anspruchs 1. Vorteilhafte Ausgestaltungen sind Gegenstand der Unteransprüche.

Erfindungsgemäß ist ein Verfahren zur Regelung eines Kältemittelkreislaufs vorgesehen, wobei der Kältemittelkreislauf aufweist: einen Kompressor, einen Kondensator, in zwei parallelen Zweigen angeordneten Expansionsorgane, Verdampfer und mindestens ein Absperrventil. Hierbei wird einer der Verdampfer von dem Fahrzeuginnenraum zuzuführender Luft durchströmt, und der zweite der Verdampfer wird von dem Motor zuzuführender Ladeluft durchströmt. Erfindungsgemäß ist zumindest in dem dem Fahrzeuginnenraum zugeordneten Zweig ein Absperrventil angeordnet, und die Regelung der Verteilung des Kältemittels auf die beiden parallelen Zweige sich in einem ersten Schritt nach dem Kühlbedarf der Ladeluft. Eine derartige Regelung ermöglicht eine Kraftstoffeinsparung und/oder eine Leistungssteigerung in einem relativ großen Betriebsbereich des Fahrzeugmotors. Ferner kann der Kältemittelkreislauf sicher in Bezug auf beide Verdampfer betrieben werden. Eine bedarfsgerechte Verteilung des Kältemittelmassenstroms auf die beiden Verdampfer ist möglich.

In dem Verdampfer, der dem Fahrzeuginnenraum zugeordnet ist, ist vorzugsweise ein Kältespeicher integriert oder demselben zugeordnet, der bei hohem Kühlbedarf der Ladeluft zumindest kurzfristig die Kühlfunktion für die dem Fahrzeuginnenraum zuzuführende Luft übernimmt. Das Vorsehen eines Kältespeichers im dem Fahrzeuginnenraum zugeordneten Verdampfer ermöglicht insbesondere den Komfort im Fahrzeuginnenraum kurzfristig auch ohne Kältemittelmassenstrom durch den entsprechenden Verdampfer aufrecht zu erhalten, so dass sich keine Komforteinbußen ergeben. So kann bei hoher Lastanforderung an den Verbrennungsmotor die volle Kälteleistung am Ladeluft/Kältemittel-Verdampfer zur Verfügung stehen, und somit kann die maximal mögliche Leistung des Verbrennungsmotors erzielt werden, ohne dass der Komfort im Fahrzeuginnenraum möglicherweise beeinträchtigt wird.

Bevorzugt wird in einem ersten Schritt das gesamte Kältemittel durch den der Kühlung Ladeluft zugeordneten Verdampfer geleitet, und in einem zweiten Schritt zumindest ein Teil des Kältemittels durch den der Kühlung der dem Fahrzeuginnenraum zuzuführenden Luft zugeordneten Verdampfer geleitet, wobei die Dauer des ersten Schritts durch ein vorgegebenes Zeitintervall bemessen ist, und/oder die Dauer des ersten Schritts durch eine Überschreitung einer vorgegebenen Maximal-Temperatur oder einer vorgegebenen Temperaturdifferenz zur Soll-Temperatur durch die Ist-Temperatur des Fahrzeuginnenraums beendet wird.

Vorzugsweise wird der Kühlbedarf der Ladeluft über die Pedalstellung des Gaspedals und/oder des Bremspedals und/oder über die Stellung der Drosselklappe ermittelt. Eine derartige Ermittlung des Kühlbedarfs der Ladeluft ist einfach und kostengünstig zu realisieren. Alternativ kann auch die Geschwindigkeit bzw. deren Veränderung in einem bestimmten (kurzen) Zeitintervall herangezogen werden. Diese Daten lassen sich über die entsprechenden Steuergeräte verarbeiten.

Besonders bevorzugt ist der zweite Verdampfer zumindest bereichsweise als Speicherverdampfer ausgebildet, wobei der Kältespeicher des Speicherver dampfers in einem Fall beladen wird, in dem keine oder fast keine Ladeluftunterkühlung notwendig ist, d.h. über den Ladeluft/Kältemittel-Verdampfer strömen keine oder sehr geringe Luftmengen. Dies verhindert oder mindert zumindest etwas ein mögliches Vereisen des Verdampfers, wenn der Ladeluftmassenstrom null oder nahezu null ist. Die gespeicherte Kälte ermöglicht Belastungsspitzen auszugleichen. Das Beladen des Speicherverdampfers ist relativ verbrauchsneutral, zumindest wenn es im Schub- oder Bremsbetrieb erfolgt.

Besonders bevorzugt ist ein regelbarer Bypass um den Kältespeicherbereich vorgesehen, so dass für eine Beladung des Kältespeichers nur ein relativ geringer Kältemittelmassenstrom erforderlich ist.

Der Hauptvorteil einer zumindest bereichsweisen Ausgestaltung des zweiten Verdampfers als Speicherverdampfer ist, dass eine sofortige Bereitstellung von Kühlleistung durch den Kältespeicher möglich ist. Da der Kältekreislauf bzw. ein Aufbau des kältemittelseitigen Massenstroms eine gewisse Zeit benötigt, aber die Abkühlung der Ladeluft sofort, d.h. innerhalb von weniger als einer Sekunde, erfolgen sollte. Somit kann der Speicherverdampfer Leistungsspitzen abdecken.

Insbesondere kann durch den Speicherverdampfer bei sehr schneller Leistungsabfrage durch eine schlagartige Änderung des Luftmassenstroms, beispielsweise in Folge eines Beschleunigungsvorgangs, der Ladeluft nach wie vor ausreichend Wärme entzogen werden. Ohne einen Speicherverdampfer würde die Luft nach dem Ladeluft/Kältemittel-Verdampferaustritt zunächst stark ansteigen, da innerhalb kürzester Zeit (sehr instationär) in Folge der Trägheit der Kältekreislaufregelung bzw. der Trägheit des Kättekreislaufs, kein ausreichend großer Kältemittelmassenstrom bereitgestellt werden kann, und somit würde die Ausblastemperatur ansteigen.

Ein derartiges erfindungsgemäßes Verfahren ist für ein Kraftfahrzeug verwendbar mit einem Verbrennungsmotor, dem Ladeluft zuführbar ist, und einem Kältemittelkreislauf, welcher einen ersten Verdampfer aufweist, der von dem Fahrzeuginnenraum zuzuführender Luft durchströmbar ist, und einen zweiten Verdampfer aufweist, der von Ladeluft durchströmbar ist.

Bevorzugt ist nur im dem Zweig des Kältemittelkreislaufs, in dem der zur Kühlung der dem Fahrzeuginnenraum zuzuführenden Luft zugeordnete Verdampfer angeordnet ist, ein Absperrventil angeordnet. Somit kann im Bedarfsfall der Klimaanlagen-Verdampfer abgesperrt werden und die volle Kälteleistung dem Ladeluft/Kältemittel-Verdampfers zur Verfügung gestellt wer den.

Alternativ können jedoch in beiden Kältemittelzweigen Absperrventile vorgesehen sein. Diese werden besonders bevorzugt abwechselnd getaktet geöffnet bzw. geschlossen, d.h. wenn ein Kältemittelzweig von Kältemittel durchströmt wird, ist der andere Kältemittelzweig abgesperrt. Damit können beide Verdampfer bezüglich ihrer Leistung bedarfsgerecht gesteuert werden.

Besonders bevorzugt ist der Ladeluft/Kältemittel-Verdampfer unmittelbar nach einem vorhergehenden Ladeluftkühler oder der Drosselklappe angeordnet, so dass sich sehr für die Ladeluft kurze Leitungslängen vor dem Verdampfer und ausreichend lange Leitungslängen nach dem Verdampfer ergeben, die eine gleichmäßige Verteilung, d.h. ein homogenes Temperaturprofil vor dem Eintritt in die Zylinder des Verbrennungsmotors, unterstützten. Durch eine nicht verbrennungsmotornahe Anordnung kann zum einen die gesamte Stirnfläche genutzt werden, zum anderen ergibt sich dadurch, dass stromabwärts noch eine ausreichende Länge des Ladeluftweges vorhanden ist, eine homogenere Ladeluft-Eintrittstemperatur an der Zylinderansaugseite des Verbrennungsmotors. Dies wiederum bietet ein weiteres Potential, zusätzlich zur Temperaturabsenkung, zur Erhöhung der Klopfgrenze, da allen Zylindern Ladeluft mit gleicher Temperatur in Folge der homogenen Temperaturverteilung zugeführt wird. Dies hat seinerseits eine Verschiebung der Klopfgrenze zur Folge, dadurch ergibt sich eine günstigere Schwerpunktlage der Verbrennung durch einen früheren Zündwinkel (höhere Leistung bei geringerem Verbrauch). Dazu kann der Bereich λ=1 ausgeweitet werden (Die Anfettung des Gemisches kann reduziert werden, was Kraftstoff einspart (der Mischungswert Benzin/Luft kann in Richtung eins erhöht werden)).

Die Ausgestaltung der Ladeluftleitungen kann zudem auf das Temperaturprofil des Verdampfers ausgelegt werden, so dass sich eine optimale Temperaturverteilung in Verbindung mit einer optimalen Gestaltung in Bezug auf die Abmessungen ergibt. Es sind auch kurze Leitungen im Bereich des Kältemittelkreislaufs wichtig, um die Menge des erforderlichen Kältemittels und somit auch die Masse der gesamten Anordnung zu minimieren, dann lässt sich das Regelverhalten bzw. die Regelgeschwindigkeit verbessern, d.h. die Ansprechzeiten des Kältemittelkreislaufs zu verkürzen. Die Positionierung des Ladeluft/Kältemittel-Verdampfers direkt nach dem Kondensator und vor dem Kompressor ist vorteilhaft.

Vorzugsweise ist mindestens eine Verbindung zwischen dem ersten Zweig und dem zweiten Zweig vorgesehen, welche in einen Ejektor einmündet. Insbesondere bevorzugt ist der Ejektor im ersten, der Klimaanlage zugeordneten Zweig angeordnet. Die Verbindung ist vorzugsweise durch eine Leitung gebildet, welche nach dem Verdampfer des zweiten Zweigs abzweigt und in den im ersten Zweig angeordneten Ejektor einmündet. Diese Ausgestaltung verringert zwar den Wirkungsgrad etwas, jedoch können beide Verdampfer gleichzeitig betrieben werden, d.h. auf eine Taktung kann verzichtet werden.

Dem Ejektor nachgeordnet kann ein Separator für eine Trennung der flüssigen und gasförmigen Kältemittelphasen angeordnet sein. In diesem Fall ist bevorzugt eine Rückführung des flüssigen Kältemittels in den anderen Zweig vorgesehen, insbesondere in einen Bereich vor dem entsprechenden Expansionsorgan.

Im Folgenden wird die Erfindung anhand mehrerer Ausführungsbeispiele, teilweise unter Bezugnahme auf die Zeichnung, im Einzelnen erläutert. Es zeigen:
- Fig. 1: eine schematische Darstellung eines Kältemittelkreislaufs gemäß dem ersten Ausführungsbeispiel,
- Fig. 2: eine Prinzipskizze für eine Regelung eines Kältemittelkreislaufs gemäß dem ersten Ausführungsbeispiels,
- Fig. 3: eine schematische Darstellung des Ladeluft-Strömungsweges, und
- Fig. 4: eine schematische Darstellung eines Kältemittelkreislaufs gemäß dem dritten Ausführungsbeispiel.

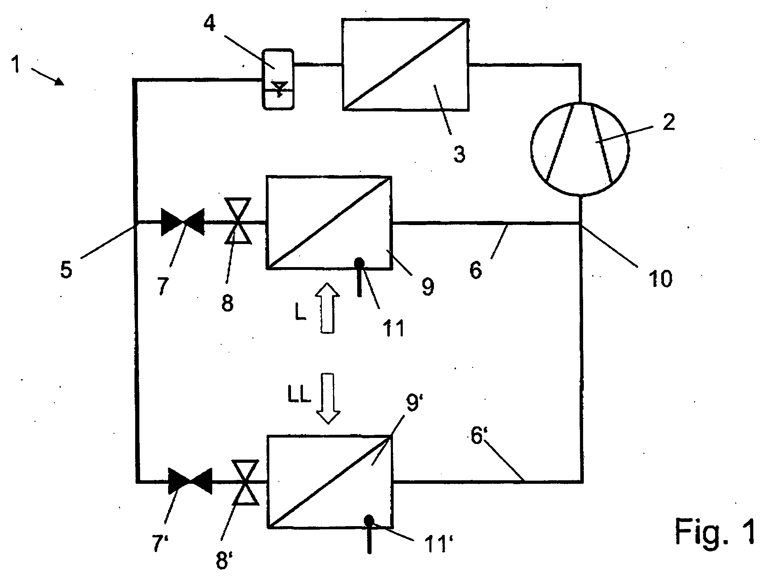

Ein Kältemittelkreislauf 1 eines Kraftfahrzeugs, wie in Fig. 1 schematisch dargestellt, weist gemäß dem ersten Ausführungsbeispiel einen mit einem Verbrennungsmotor M gekoppelten Kompressor 2, in welchem das gasförmige Kältemittel verdichtet wird, einen Kondensator 3, in weichem das verdichtete, heiße Kältemittel vorliegend von Umgebungsluft abgekühlt wird, einen Sammler 4, eine Verzweigungsstelle 5, an welchem sich der Kältemittelkreislauf 1 in zwei Zweige 6 und 6' (erster Zweig 6 und zweiter Zweig 6') verzweigt, wobei in jedem der Zweige 6 und 6', ein Expansionsorgan 7 bzw 7' für eine Expansion und eine damit verbundene weitere Abkühlung des durchströmenden Kältemittels, ein Absperrventil 8 bzw. 8' für die Regelung der Kältemittelverteilung auf die beiden Zweige 6 und 6', sowie ein Verdampfer 9 bzw. 9' angeordnet ist, und eine Verbindungsstelle 10, an der die beiden Zweige 6 und 6' wieder zusammengeführt werden, auf. Der Verdampfer 9 im ersten Zweig 6 ist einer Kraftfahrzeug-Klimaanlage zugeordnet und nimmt Wärme aus der dem Fahrzeuginnenraum zuzuführenden Luft L auf, weshalb er im Folgenden auch als Klimaanlagen-Verdampfer 9 bezeichnet wird. Ferner weist dieser Klimaanlagen-Verdampfer 9 gemäß dem vorliegendden Ausführungsbeispiel einen Kältespeicher auf, in welchem Kälte gespeichert und bei Bedarf somit Kühlleistung für einen begrenzten Zeitraum zur Verfügung gestellt werden kann, wenn der Klimaanlagen-Verdampfer 9 nicht (oder ggf. auch nur minimal und somit für den Bedarfsfall unzureichend) von Kältemittel durchströmt wird. Auf Grund des Kältespeichers wird dieser Verdampfer auch als Speicherverdampfer bezeichnet. Der Kältespeicher kann optional jedoch auch entfallen.

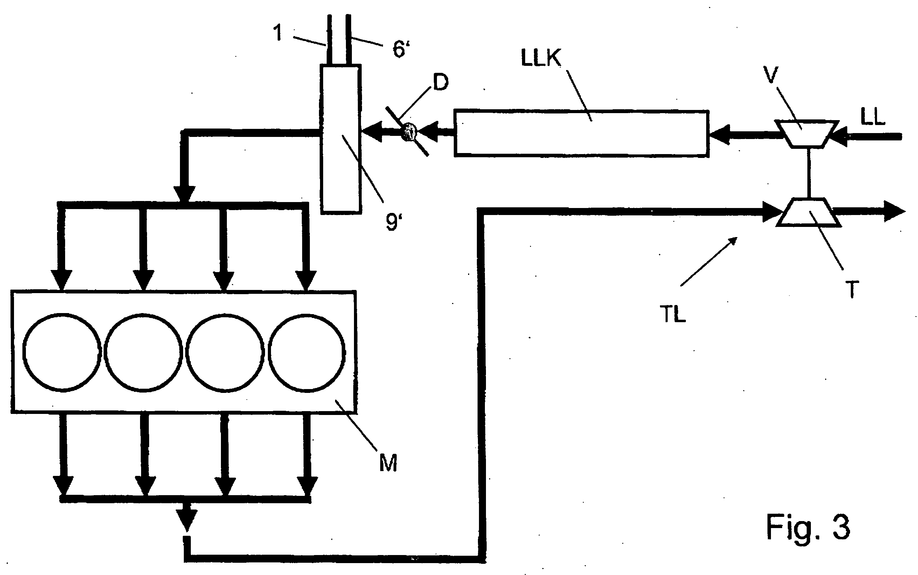

Der zweite Verdampfer 9' im zweiten Zweig 6' nimmt Wärme von dem Verbrennungsmotor M zuzuführender Ladeluft LL auf (siehe Fig. 3), weshalb er auch als Ladeluft/Kältemittel-Verdampfer 9' bezeichnet wird. Für die Regelung des Kältemittelkreislaufs 1 ist ferner jeweils ein Temperaturfühler 11 und 11' im Bereich des entsprechenden Verdampfers 9 bzw. 9' vorgesehen, welcher die Ausströmtemperatur der Luft L bzw. der Ladeluft LL ermittelt.

Aus der schematischen Darstellung von Fig. 1 ist nicht ersichtlich, dass der Ladeluft/Kältemittel-Verdampfer 9' in Bezug auf die Kältemittelführung sehr nahe am Kondensator 3 bzw. Sammler 4 und nahe am Expansionsorgan 7' angeordnet ist, so dass sich sehr kurze Leitungswege ergeben.

Nun Bezug nehmend auf Fig. 3, wird die Anordnung des Ladeluft/Kältemittel-Verdampfers 9' im Strömungsweg der Ladeluft LL näher erläutert. Die Ladeluft LL wird von einem auf an sich herkömmliche Weise ausgebildeter Turbolader TL über dessen Kompressorseite angesaugt, wobei der Kompressor V des Turboladers mit einer vom Abgas angetriebenen Turbine T gekoppelt ist. Die verdichtete und damit erhitzte Ladeluft LL wird in einer ersten Kühlstufe in einem herkömmlichen Ladeluftkühler LLK abgekühlt. Nachfolgend ist eine Drosselklappe D zur Regelung des Ladeluftstroms angeordnet. Anschließend gelangt die vorgekühlte Ladeluft LL in den Ladeluft/Kältemittel-Verdampfer 9', in welchem sie durch das deutlich kältere Kältemittel unterkühlt wird, bevor sie zum Verbrennungsmotor M des Kraftfahrzeugs gelangt. Als Abgas verlässt die Ladeluft LL den Verbrennungsmotor M und treibt die Turbine T des Turboladers TL an, bevor sie über den Auspuff nach außen abgegeben oder angesaugter, frischer Ladeluft LL beigemischt wird. Der Ladeluft/Kältemittel-Verdampfer 9' ist ebenfalls direkt nach dem Ladeluftkühler LLK und der Drosselklappe D angeordnet, so dass sich auch hier sehr kurze Wege für die zu kühlende Ladeluft LL ergeben. In diesem Bereich ist noch keine Aufteilung der Ladeluft auf die einzelnen Zylinder des Verbrennungsmotors M vorgesehen, so dass sich zudem eine gleichmäßige Verteilung auf die Wärmetauschfläche des Verdampfers 9' und damit auch eine gleichmäßige Kühlung der Ladeluft LL ergibt.

Der Kältemittelkreislauf 1 wird vorliegend betrieben, wie im Folgenden anhand verschiedener Lastfälle beschrieben ist:
Lastfall 1: Hohe Leistungsanforderung des Klimaanlagen-Verdampfers 9 (Kühlen des Fahrzeuginnenraums) in Verbindung mit hoher Leistungsanforderung des Ladeluft/Kältemittel-Verdampfers 9' (Beschleunigung).

In diesem extremen Belastungsfall des Kältemittelkreislaufs 1 wird gemäß dem vorliegenden Ausführungsbeispiel der Ladeluft/Kältemittel-Verdampfer 9' bevorzugt, d.h. es wird - sobald ermittelt wird, dass bei einem maximalen Kühlbetrieb des Klimaanlagen-Verdampfers 9 ein Beschleunigungsvorgang eingeleitet wurde - das Absperrventil 8 des ersten Zweigs 6, der dem Fahrzeuginnenraum zugeordnet ist, sofort vollstandig geschlossen und das entsprechende Absperrventil 8' des zweiten Zweigs 6', der dem Ladeluft/Kältemittel-Verdampfer 9' zugeordnet ist, sofort vollständig geöffnet, so dass das gesamte Kältemittel dem zweiten Zweig 6' und somit dem Ladeluft/Kältemittel-Verdampfer 9' zu Verfügung steht und somit die volle Motorleistung abgerufen werden kann.

Die Ermittlung des Beschleunigungsvorgangs erfolgt vorliegend über die Stellung der Drosselklappe D, die im Beschleunigungsfall (oder im Fall einer sehr hohen Fahrgeschwindigkeit) vollständig geöffnet ist. Alternativ kann der Beschleunigungsvorgang auch durch die Pedalstellung des Gaspedals oder die Änderung der Fahrgeschwindigkeit ermittelt werden.

Um diesen Beschleunigungsvorgang, der in der Regel nur relativ kurz dauert, für die Insassen möglichst ohne wesentlichen Komfortverlust zu überbrücken, ist der Klimaanlagen-Verdampfer 9 gemäß dem vorliegenden Ausführungsbeispiel, wie zuvor erwähnt, als Speicherverdampfer ausgebildet, d.h. er weist einen Kältespeicher auf, in weichem Kälte gespeichert werden kann, die bei Bedarf für eine Kühlung der dem Fahrzeuginnenraum zuzuführenden Luft wieder abgegeben werden kann, so dass der Wegfall der Kältemitteldurchströmung des Klimaanlagen-Verdampfer 9 ohne Komforteinbußen überbrückt werden kann. Als Kältespeicher ist vorliegend ein Latentmedium vorgesehen mit einem Schmelzpunkt von ca. 5°C. Auch wenn vorstehend und nachfolgend nur von einem Kältespeicher die Rede ist, kann dieser durch mehrere einzelne Speicherelemente gebildet sein, die gegebenenfalls auch unabhängig voneinander beladen und entladen werden können. Beispiele derartiger Kältespeicher sind aus dem Stand der Technik bekannt.

Lastfall 2: Hohe Leistungsanforderung des Klimaanlagen-Verdampfers 9 (Kühlen des Fahrzeuginnenraums) in Verbindung mit hoher Leistungsanforderung des Ladeluft/Kältemittel-Verdampfers 9' (konstante, hohe Fahrgeschwindigkeit).

Entsprechend dem zuvor beschriebenen Lastfall 1 wird der Ladeluft/Kältemittel-Verdampfer 9' in diesem Lastfall bevorzugt. D.h. es wird - sobald ermittelt wird, dass bei einem maximalen Kühlbetrieb des Klimaanlagen-Verdampfers 9 ein Beschleunigungsvorgang vorliegt oder noch nicht beendet, sondern in einer Fahrt mit hoher Fahrgeschwindigkeit fortgesetzt wird - das Absperrventil 8 des ersten Zweigs 6, der dem Fahrzeuginnenraum zugeordnet ist, weiter vollständig geschlossen gehalten und das entsprechende Absperrventil 8' des zweiten Zweigs 6', der dem Ladeluft/Kältemittel-Verdampfer 9' zugeordnet ist, weiter vollständig geöffnet gehalten, so dass das gesamte Kältemittel dem zweiten Zweig 6' und somit dem Ladeluft/Kältemittel-Verdampfer 9' zu Verfügung steht und somit weiterhin die volle Motorleistung abgerufen werden kann.

Die Ventilstellungen werden geändert, wenn - bei gleichbleibenden Anforderungen - das Absperrventil 8 des ersten Zweigs länger als insgesamt 60 Sekunden geschlossen ist und/oder die Fahrzeuginnenraumtemperatur auf einen Wert über 26 bis 28°C angestiegen ist. Dann erfolgt eine Betätigung des Absperrventils 8 im Taktbetrieb, d.h. es öffnet und schließt in regelmäßigen Abständen, so dass auf Grund des Kältemittelteilstroms durch den Klimaanlagen-Verdampfer 9 derselbe etwas gekühlt wird und somit im Fahrzeuginnenraum die Temperatur nicht zu sehr ansteigt. Auf Grund der Ausgestaltung des Klimaanlagen-Verdampfers 9 als Speicherverdampfer kann der Wegfall der kontinuierlichen, kältemittelbewirkten Kühlleistung desselben über den Kältespeicher zumindest kurzfristig abgefangen werden, vorliegend mindestens besagte 60 Sekunden. Ist über den Kältespeicher jedoch keine weitere Kühlung der durchströmenden Luft mehr möglich und steigt die Fahrzeuginnenraumtemperatur auf einen Wert über 26 bis 28°C, so erfolgt besagter Taktbetrieb des Absperrventils 8, so dass ein gewisser Kältemittelmassenstrom durch den Klimaanlagen-Verdampfer 9 strömt und zumindest für eine leichte Kühlung des Fahrzeuginnenraums sorgt und die Fahrzeuginnenraumtemperatur auf ca. 23 bis 24°C gehalten werden kann.

Alternativ ist auch eine bedarfsgeregelte Betätigung des Absperrventils 8 möglich, nämlich wenn die Temperatur des Fahrzeuginnenraums auf eine Temperatur über 26 bis 28°C ansteigt. In diesem Fall erfolgt eine getaktete Öffnung des Absperrventils 8, bis die Temperatur des Fahrzeuginnenraums auf 23 bis 24°C oder den eingestellten Sollwert am Bediengerät der Klimaanlage abgesenkt wurde.

Lastfall 3: Mittlere Leistungsanforderung des Klimaanlagen-Verdampfers 9 (leichtes Kühlen des Fahrzeuginnenraums zum Halten der Temperatur) in Verbindung mit mittlerer Leistungsanforderung des LadeluftlKältemittel-Verdampfers 9' (konstante, mittlere Fahrgeschwindigkeit).

Im Fahrzeuginnenraum hat sich bei diesem Lastfall eine komfortable Temperatur von 21 bis 24°C eingestellt bzw. der eingestellte Sollwert am Bediengerät der Klimaanlage eingestellt, d.h. die erforderliche Kühlleistung zum Halten dieser Temperatur ist relativ gering. Ferner wird auch seitens des Ladeluft/Kältemittel-Verdampfers 9' keine extrem hohe Kühlleistung angefordert. Bei diesem Betrieb wird das Absperrventil 8 wiederum in einem Taktbetrieb betrieben, wobei es vorliegend in regelmäßigen Zeitintervallen öffnet und schließt, so dass der von den Insassen eingestellte Sollbereich der Temperatur des Fahrzeuginnenraums, beispielsweise 23 bis 24°C gehalten wird. Der zur Verfügung stehende, übrige Kältemittelmassenstrom dient zur Kühlung der Ladeluft im Ladeluft/Kältemittel-Verdampfer 9', wodurch Kraftstoff eingespart werden kann.

Bei dem als Speicherverdampfer ausgebildeten Klimaanlagen-Verdampfer kann währenddessen die nicht für eine Kühlung des Fahrzeuginnenraums oder der Ladeluft benötigte Kühlleistung zur Aufladung des Kältespeichers verwendet werden. Die Aufladung kann auf an sich bekannte Weise erfolgen, beispielsweise dadurch, dass ein Teil des Klimaanlagen-Verdampfers für die dem Fahrzeuginnenraum zuzuführende Luft abgesperrt wird. Alternativ ist auch eine Beladung des Kältespeichers parallel zur Kühlung der durchströmenden Luft möglich.

Lastfall 4: Sehr geringe Leistungsanforderung des LadeluftlKältemittel-Verdampfers 9' (starker Bremsvorgang).

Bei einem starken Bremsvorgang, wie beispielsweise bei einer Vollbremsung auf der Autobahn, wird die Drosselklappe D innerhalb kürzester Zeit (t < 2 Sekunden) geschlossen, wodurch der Luftmassenstrom durch den Ladeluft/Kältemittel-Verdampfer 9' innerhalb dieser Zeit auf nahezu null (beispielsweise 20 kg/h) abfällt. In diesem Fall besteht die Gefahr eines Vereisens des Ladeluft/Kältemittel-Verdampfers 9', wenn zuvor eine sehr niedrige Luftaustrittstemperatur herrschte oder noch Kältemittel nachverdampft.

Je nach Belastungsfall des Klimaanlagen-Verdampfers 9 kann es - im Fall, dass der Fahrzeuginnenraum nicht gekühlt werden muss - zu einem vollständigen Abregeln des Kompressors 2 oder - im Fall, dass der Fahrzeuginnenraum gekühlt werden muss - zu einem Schließen des Absperrventils 8' und damit zu einem Strömen des gesamten Kältemittelmassenstroms über den Klimaanlagen-Verdampfer 9 kommen. Im Vorliegenden Fall erfolgt die Regelung wiederum in Abhängigkeit der Stellung der Drosselklappe D. Alternativ kann der Bremsvorgang auch durch die Pedalstellung des Gaspedals oder die Änderung der Fahrgeschwindigkeit ermittelt werden.

In diesem Fall kann bei einem Bremsvorgang oder einem Schubbetrieb die Beladung des Kältespeichers des Klimaanlagen-Verdampfers 9 erfolgen. Ferner kann der Kältespeicher - im unbeladenen Zustand im Falle eines Übergangs in den Brems- oder Schubbetrieb des Fahrzeugs - ein ungewolltes Vereisen des Klimaanlagen-Verdampfers verhindern.

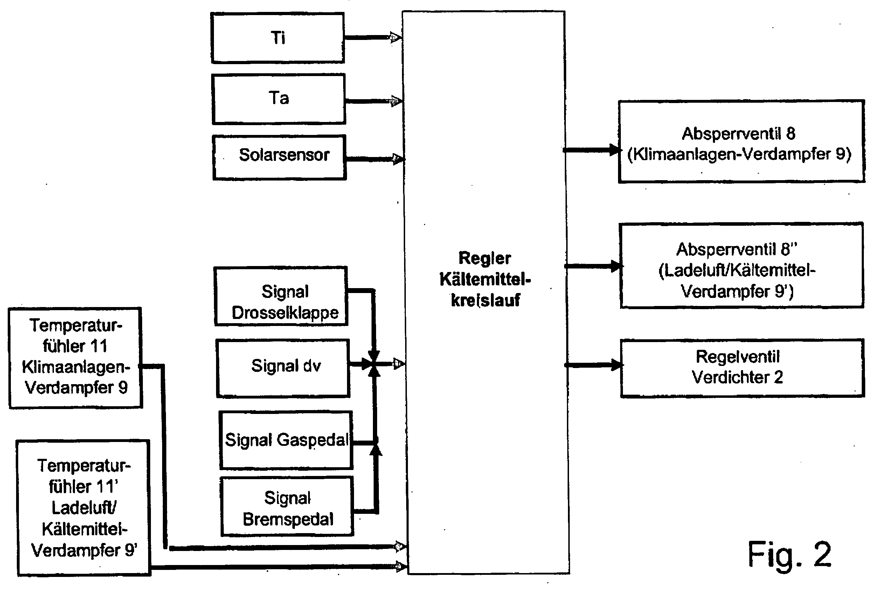

Die Regelung des Kältemittelkreislaufs 1 erfolgt somit, wie anhand der vorstehenden beschriebenen Lastfälle erläutert und in Fig. 2 schematisch angedeutet, in Abhängigkeit der durch die beiden Temperaturfühler 11 und 11' ermittelten Temperaturen, der Temperatur des Fahrzeuginnenraums Ti, der Temperatur der Umgebung Ta, der mittels eines Solarsensors (nicht dargestellt) ermittelten Sonneneinstrahlung, und der Stellung der Drosselklappe D (Signal Drosselklappe). In Fig. 2 sind ferner andere Varianten zur Ermittlung der Belastung des Ladeluft/Kältemittel-Verdampfers 9' angedeutet, nämlich die Geschwindigkeitsänderung (Signal dv), die Stellung des Gaspedals (Signal Gaspedal) und die Stellung des Bremspedals (Signal Bremspedal). Hierbei ist auch eine Kombination verschiedener oder aller genannten Möglichkeiten für die Ermittlung der Belastung des Ladeluft/Kältemittel-Verdampfers 9' möglich, wobei die Genauigkeit durch eine Kombination möglichst vieler der Möglichkeiten erhöht wird.

In Abhängigkeit des Reglers des Kältemittelkreislaufs (Regler Kältemittelkreislauf) erfolgen die Stellbewegungen der Absperrventile 8 und 8' sowie die Regelung eines Regelventils des Kompressors 2 (nicht dargestellt).

Als Variante des ersten Ausführungsbeispiels ist an Stelle des Speicherverdampfers ein herkömmlicher Verdampfer ohne Kältespeicher vorgesehen. In diesem Fall muss bei den entsprechenden Betriebsbedingungen, bei denen ein großer Kühlbedarf seitens der Ladeluft besteht, der Taktbetrieb des Ventils 8 auf Grund des Fehlens der Pufferfunktion des Kältespeichers früher einsetzen, um den Komfort, d.h. vorliegend eine entsprechende Temperierung, im Fahrzeuginnenraum aufrecht erhalten zu können.

Gemäß einer weiteren Variante des ersten Ausführungsbeispiels entfällt das Absperrventil 8' des zweiten Zweigs 6', d.h. der Ladeluft/KältemittelVerdampfer 9' wird stets von Kältemittel durchströmt.

Alternativ kann auch der Ladeluft/Kältemittel-Verdampfer als Speicherverdampfer mit einem Kältespeicher versehen ausgebildet sein, d.h. die Ladeluft kann auch bei einer kurzzeitigen Unterbrechung der Kältemittelversorgung des Verdampfers gekühlt werden und kann Leistungsspitzen der Ladeluftkühlung abpuffem. Die Beladung dieses Ladeluft-Speicherverdampfers erfolgt während des Schub- oder Bremsbetriebs oder in einem stationären Betrieb ohne maximaler Anforderung von Kühlung der Ladeluft. Ferner kann der Kältespeicher im ungeladenen Zustand ein Vereisen verhindern oder zumindest verringem, wenn der Ladeluftmassenstrom null oder nahezu null ist.

Alternativ ist entgegen der vorigen Ausführungen auch eine luftseitige Regelung bzw. Steuerung der Verdampfer möglich. Eine Klappe vor dem Ladeluft/Kältemittel-Verdampfer leitet im Beladungsfall über einen Bypass Ladeluft vorbei am Ladeluft/Kältemittel-Verdampfer, so dass das Latentmedium im Kältespeicher gefriert. Somit kann mit einem geringen Kältemittelmassenstrom, d.h. mit geringer Kälteleistung, der LadeluftlKältemittel-Verdampfer beladen werden und im Lastfall, also beispielsweise bei erhöhter Ladeluftleistung im Rahmen eines Beschleunigungsvorgangs, die Klappe umgelegt werden, so dass die gesamte Ladeluft über den Ladeluft/Kältemittel-Verdampfer strömt und von Kältespeicher gekühlt wird.

Gemäß dem zweiten Ausführungsbeispiel, das sich sofern nachfolgend nicht ausdrücklich erwähnt, nicht vom ersten Ausführungsbeispiel unterscheidet, ist an Stelle des Kompressors 2, der mit dem Verbrennungsmotor M gekoppelt ist, ein elektrisch betätigbarer Kompressor vorgesehen, so dass die Kompressorleistung unabhängig von der aktuellen Motordrehzahl und somit auch die Regelung des Kompressors vereinfacht ist, d.h. das zuvor genannte Regelventil kann in diesem Fall entfallen.

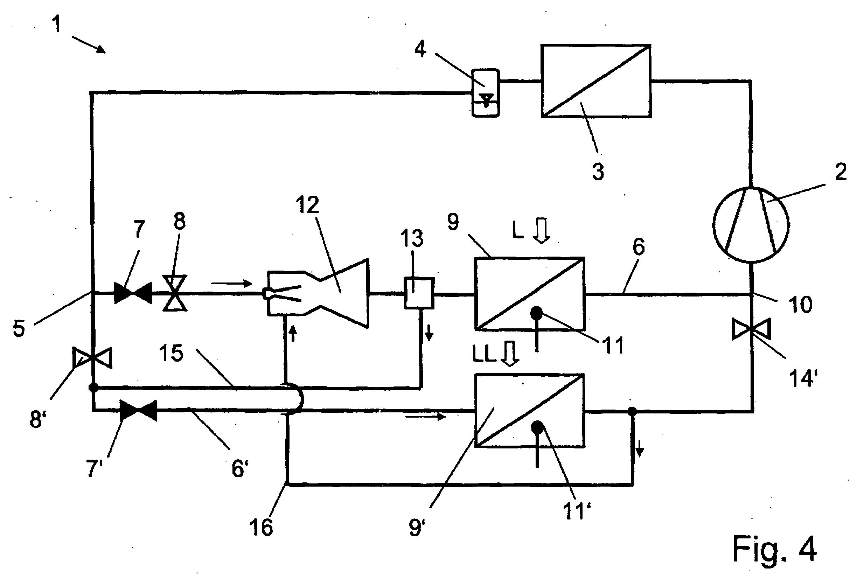

Fig. 4 zeigt ein drittes Ausführungsbeispiel, gemäß dem der Kältemittelkreislauf 1 einen Ejektor 12 aufweist, der im ersten Zweig 6, der dem Klimaanlagen-Verdampfer 9 zugeordnet ist, angeordnet ist. Der Ejektor 12 ist im ersten Zweig 6 nach dem Expansionsorgan 7 und dem Absperrventil 8 und vor einem Separator 13, auf den an späterer Stelle näher eingegangen wird, und dem Verdampfer 9 angeordnet. Der zweite Zweig 6', in welchem der Ladeluft/Kältemittel-Verdampfer 9' angeordnet ist, unterscheidet sich durch die Reihenfolge der Anordnung des Absperrventils 8' und des Expansionsorgans 7', die umgekehrt zu den zuvor beschriebenen Anordnungen angeordnet sind, und durch ein am Ende des zweiten Zweigs 6' angeordnetes, zweites Absperrventil 14' sowie durch zwei Verbindungen zum ersten Zweig 6, wobei die erste Verbindung 15 hinter dem ersten Absperrventil 8' und vor dem Expansionsorgan 7' zum im ersten Zweig 6 angeordneten Separator 13 abzweigt, und die zweite Verbindung 16 hinter dem Ladeluft/Kältemittel-Verdampfer 9' zum Ejektor 12 abzweigt, vom Aufbau des zweiten Zweigs 6' gemäß dem zuvor beschriebenen ersten Ausführungsbeispiel.

Die Funktion des Ejektors 12 ist Folgende: Der Ejektor 12 hat einen als Düse ausgebildeten ersten Eingang für das Kältemittel (Zweig 6), in der das Kältemittel zunächst in einem stark gerichteten Strahl auf einen Druck p0 entspannt und dabei beschleunigt wird. Nachfolgend mischt sich dieser Gasstrahl mit Kältemittel aus der in einem zweiten Eingang in den Ejektor 12 mündenden Verbindung 16 zum zweiten Zweig 6'. Die Expansion des gerichteten gemischten Strahls in einem Diffusor des Ejektors führt zu einem Druckanstieg des Gemisches auf den Druck p1. Dieses Gemisch enthält flüssige und gasförmige Phase des Kältemittels, weshalb vorliegend besagter Separator 13 nachgeschaltet angeordnet ist (Ejektor und Separator können hierbei auch als ein Bauteil ausgebildet sein), der die flüssige Phase abtrennt, so dass ausschließlich (oder nahezu ausschließlich) gasförmiges Kältemittel in den Klimaanlagen-Verdampfer 9, insbesondere aber - in Folge der ggf. erfolgenden Nachverdampfung des flüssigen Kältemittels im Verdampfer - nicht zum Kompressor 2 gelangt. Das flüssige Kältemittel wird dem zweiten Zweig 6' vor dem Expansionsorgan 7' und nachfolgend dem Ladeluft/Kältemittel-Verdampfer 9' zugeführt.

Diese Anordnung hat den Vorteil, dass beide Verdampfer 9 und 9' gleichzeitig in Betrieb sein können, d.h. dass der Komfort im Fahrzeuginnenraum weniger beeinträchtigt wird.

Gemäß einer Variante des dritten Ausführungsbeispiels entfällt der Separator 13 samt Verbindung 15, d.h. es gelangt kein Kältemittel aus dem ersten Zweig 6 in den zweiten Zweig 6', jedoch gelangt Kältemittel aus dem zweigen Zweig 6' über die Verbindung 16 zum Ejektor 13 und damit in den ersten Zweig 6.

## Patentansprüche

1. Verfahren zur Regelung eines Kältemittelkreislaufs (1), mit einem Kompressor (2), einem Kondensator (3), in zwei parallelen Zweigen (6, 6') angeordneten Expansionsorganen (7, 7'), Verdampfern (9, 9') und mindestens einem Absperrventil (8, 8'), wobei einer der Verdampfer (9) von dem Fahrzeuginnenraum zuzuführender Luft (L) durchströmt wird, und der zweite der Verdampfer (9') von dem Motor (M) zuzuführender Ladeluft (LL) durchströmt wird, **dadurch gekennzeichnet, dass** in zumindest dem dem Fahrzeuginnenraum zugeordneten Zweig (6) ein Absperrventil (8) angeordnet ist, und die Regelung der Verteilung des Kältemittels auf die beiden parallelen Zweige (6, 6') sich in einem ersten Schritt nach dem Kühlbedarf der Ladeluft (LL) richtet.

2. Verfahren nach Anspruch 1, **dadurch gekennzeichnet, dass** der dem Fahrzeuginnenraum zugeordnete Verdampfer (9) einen Kältespeicher aufweist, und bei hohem Kühlbedarf der Ladeluft (LL) zumindest kurzfristig die Kühlfunktion für die dem Fahrzeuginnenraum zuzuführende Luft (L) übernimmt.

3. Verfahren nach Anspruch 1 oder 2, **dadurch gekennzeichnet, dass** in einem ersten Schritt das gesamte Kältemittel durch den der Kühlung Ladeluft (LL) zugeordneten Verdampfer (9') geleitet wird, und in einem zweiten Schritt zumindest ein Teil des Kältemittels durch den der Kühlung der dem Fahrzeuginnenraum zuzuführenden Luft (L) zugeordneten Verdampfer (9) geleitet wird, wobei die Dauer des ersten Schritts durch ein vorgegebenes Zeitintervall bemessen ist, und/oder die Dauer des ersten Schritts durch eine Überschreitung einer vorgegebenen Maximal-Temperatur oder einer vorgegebenen Temperaturdifferenz zur Soll-Temperatur durch die Ist-Temperatur des Fahrzeuginnenraums beendet wird.

4. Verfahren nach einem der vorhergehenden Ansprüche, **dadurch gekennzeichnet, dass** der Kühlbedarf der Ladeluft (LL) über die Pedalstellung des Gaspedals und/oder des Bremspedals und/oder über die Stellung der Drosselklappe (D) und/oder über eine Änderung der Geschwindigkeit ermittelt wird.

5. Verfahren nach einem der vorhergehenden Ansprüche, **dadurch gekennzeichnet, dass** der zweite Verdampfer (9') als Speicherverdampfer ausgebildet ist, wobei der Kältespeicher des Speicherverdampfers in einem Fall beladen wird, in dem keine oder fast keine Ladeluft den zweiten Verdampfer (9') durchströmt.

6. Kraftfahrzeug mit einem Verbrennungsmotor (M), dem Ladeluft (LL) zuführbar ist, und einem Kältemittelkreislauf (1), welcher einen ersten Verdampfer (9) aufweist, der von dem Fahrzeuginnenraum zuzuführender Luft durchströmbar ist, und einen zweiten Verdampfer (9') aufweist, der von Ladeluft (LL) durchströmbar ist, **gekennzeichnet durch** eine Regelung nach einem der vorhergehenden Ansprüche.

7. Kraftfahrzeug nach Anspruch 6, **dadurch gekennzeichnet, dass** der erste Verdampfer (9) ein Speicherverdampfer ist.

8. Kraftfahrzeug nach Anspruch 6 oder 7, **dadurch gekennzeichnet, dass** der zweite Verdampfer (9') ein Speicherverdampfer ist.

9. Kraftfahrzeug nach Anspruch 7 oder 8, **dadurch gekennzeichnet, dass** ein Bypass zum als Speicherverdampfer ausgebildeten ersten bzw. zweiten Verdampfer vorgesehen ist.

10. Kraftfahrzeug nach einem der Ansprüche 6 bis 9, **dadurch gekennzeichnet, dass** nur im dem Zweig (6), in dem der zur Kühlung der dem Fahrzeuginnenraum zuzuführenden Luft (L) zugeordnete Verdampfer (9) angeordnet ist, ein Absperrventil (8) angeordnet ist.

11. Kraftfahrzeug nach einem der Ansprüche 6 bis 10, **dadurch gekennzeichnet, dass** der Ladeluft/Kältemittel-Verdampfer (9') unmittelbar nach einem vorhergehenden Ladeluftkühler oder der Drosselklappe (D) angeordnet ist.

12. Kraftfahrzeug nach einem der Ansprüche 6 bis 11, **dadurch gekennzeichnet, dass** in dem Kältemittelkreislauf (1) ein Ejektor (12) angeordnet ist.

13. Kraftfahrzeug nach Anspruch 12, **dadurch gekennzeichnet, dass** der Ejektor (12) vor dem Klimaanlagen-Verdampfer (9) im ersten Zweig (6) angeordnet ist, und über eine Verbindung (16) mit dem zweiten Zweig (6') hinter dem Ladeluft/Kältemittel-Verdampfer (9') verbunden ist.

## Claims

1. A method for controlling a refrigeration fluid circuit (1), with a compressor (2), a condenser (3), expansion organs (7, 7') and evaporators (9, 9') arranged in two parallel branches (6, 6'), and at least one shut-off valve (8, 8'), wherein one of the evaporators (9) is fed with the air (L) being supplied to the vehicle interior, and the second of the evaporators (9') is fed with charge air (LL) being supplied to the engine (M), **characterised in that** a shut-off valve (8) is disposed in at least one of the branches (6) assigned to the vehicle interior, and the control of the refrigeration fluid distribution to the two parallel branches (6, 6') is based on the cooling requirement of the charge air (LL) in a first step.

2. The method according to claim 1, **characterised in that** the evaporator (9) assigned to the vehicle interior has a cold reservoir, and undertakes the cooling function for the air (L) assigned to the vehicle interior in the short term at least in the case of a high cooling demand of charge air (LL).

3. The method according to any one of claims 1 or 2, **characterised in that** all the refrigeration fluid is fed in a first step through the evaporator (9') assigned to cooling the charge air (LL), and at least part of the refrigeration fluid is fed in a second step through the evaporator (9) assigned to the air (L) being supplied to the vehicle interior, wherein the duration of the first step is determined by a predefined time period, and/or the duration of the first step is terminated as a result of the actual temperature of the vehicle interior exceeding a predefined maximum temperature or a predefined temperature difference to the target temperature.

4. The method according to any one of the preceding claims, **characterised in that** the cooling demand of the charge air (LL) is calculated through the pedal position of the gas pedal and/or the brake pedal and/or through the position of the throttle (D) and/or through a change in speed.

5. The method according to any one of the preceding claims, **characterised in that** the second evaporator (9') is designed as a storage evaporator, wherein the cold reservoir of the storage evaporator is charged in a circumstance in which no or almost no charge air flows through the second evaporator (9').

6. A motor vehicle with an internal combustion engine (M), through which charge air (LL) is feedable, and a refrigeration fluid circuit (1), which has a first evaporator (9) through which the air assigned to the vehicle interior is feedable, and a second evaporator (9'), through which the charge air (LL) is feedable, **characterised by** a control according to any one of the preceding claims.

7. The motor vehicle according to claim 6, **characterised in that** the first evaporator (9) is a storage evaporator.

8. The motor vehicle according to any one of claims 6 or 7, **characterised in that** the second evaporator (9') is a storage evaporator.

9. The motor vehicle according to any one of claims 7 or 8, **characterised in that** a bypass is provided to the first or second evaporator designed as a storage evaporator.

10. The motor vehicle according to any one of claims 6 to 9, **characterised in that** a shut-off valve (8) is only disposed in the branch (6), in which the evaporator (9) assigned to cool the air (L) being fed into the vehicle interior is disposed.

11. The motor vehicle according to any one of claims 6 to 10, **characterised in that** the charge air / refrigeration fluid evaporator (9') is disposed directly downstream of a preceding charge air cooler or throttle (D).

12. The motor vehicle according to any one of claims 6 to 11, **characterised in that** an ejector (12) is disposed in the refrigeration fluid circuit (1).

13. The motor vehicle according to claim 12, **characterised in that** the ejector (12) is disposed upstream of the air conditioning evaporator (9) in the first branch (6) and connected with the second branch (6') behind the charge air / refrigeration fluid evaporator (9') through a connector (16).

## Revendications

1. Procédé de régulation d'un circuit de fluide frigorigène (1) comprenant un compresseur (2), un condenseur (3), des détendeurs (7, 7') disposés dans deux branches parallèles (6, 6'), des évaporateurs (9, 9') et au moins une soupape d'arrêt (8, 8'), où l'un des évaporateurs (9) est traversé par de l'air (L) à fournir à l'habitacle du véhicule, et le deuxième des évaporateurs (9') est traversé par de l'air de suralimentation (LL) à fournir au moteur (M), **caractérisé en ce qu'**une soupape d'arrêt (8) est disposée au moins dans la branche (6) associée à l'habitacle du véhicule, et la régulation de la répartition du fluide frigorigène, sur les deux branches parallèles (6, 6'), se conforme, au cours d'une première étape, aux besoins en refroidissement de l'air de suralimentation (LL).

2. Procédé selon la revendication 1, **caractérisé en ce que** l'évaporateur (9) associé à l'habitacle du véhicule présente un accumulateur de froid et, en cas de besoins importants en refroidissement de l'air de suralimentation (LL), ledit évaporateur assure, au moins sur une courte durée, la fonction de refroidissement pour l'air (L) à fournir à l'habitacle du véhicule.

3. Procédé selon la revendication 1 ou 2, **caractérisé en ce que**, au cours d'une première étape, la totalité du fluide frigorigène est dirigée à travers l'évaporateur (9') associé au refroidissement de l'air de suralimentation (LL) et, au cours d'une deuxième étape, au moins une partie du fluide frigorigène est dirigée à travers l'évaporateur (9) associé au refroidissement de l'air (L) à fournir à l'habitacle du véhicule, où la durée de la première étape est mesurée par un intervalle de temps prédéfini, et / ou la durée de la première étape est achevée par un dépassement d'une température maximale prédéfinie, ou bien par un dépassement, par la température réelle de l'habitacle du véhicule, d'une différence de température prédéfinie par rapport à la température théorique.

4. Procédé selon l'une quelconque des revendications précédentes, **caractérisé en ce que** les besoins en refroidissement de l'air de suralimentation (LL) sont déterminés par la position de la pédale d'accélérateur et / ou de la pédale de frein et / ou par la position du papillon des gaz (D) et / ou par une modification de la vitesse.

5. Procédé selon l'une quelconque des revendications précédentes, **caractérisé en ce que** le deuxième évaporateur (9') est conçu comme un évaporateur accumulateur où, dans un cas, l'accumulateur de froid de l'évaporateur accumulateur est chargé, auquel cas aucun ou presque aucun air de suralimentation ne traverse le deuxième évaporateur (9').

6. Véhicule automobile équipé d'un moteur à combustion interne (M) auquel peut être fourni de l'air de suralimentation (LL) et qui est équipé d'un circuit de fluide frigorigène (1) présentant un premier évaporateur (9), qui peut être traversé par de l'air à fournir à l'habitacle du véhicule, et présentant un deuxième évaporateur (9') qui peut être traversé par de l'air de suralimentation (LL), **caractérisé par** une régulation selon l'une quelconque des revendications précédentes.

7. Véhicule automobile selon la revendication 6, **caractérisé en ce que** le premier évaporateur (9) est un évaporateur accumulateur.

8. Véhicule automobile selon la revendication 6 ou 7, **caractérisé en ce que** le deuxième évaporateur (9') est un évaporateur accumulateur.

9. Véhicule automobile selon la revendication 7 ou 8, **caractérisé en ce qu'**il est prévu une dérivation pour le premier ou le deuxième évaporateur conçu comme un évaporateur accumulateur.

10. Véhicule automobile selon l'une quelconque des revendications 6 à 9, **caractérisé en ce qu'**une soupape d'arrêt (8) est disposée seulement dans la branche (6) dans laquelle est disposé l'évaporateur (9) associé au refroidissement de l'air (L) à fournir à l'habitacle du véhicule.

11. Véhicule automobile selon l'une quelconque des revendications 6 à 10, **caractérisé en ce que** l'évaporateur (9') d'air de suralimentation / de fluide frigorigène est disposé immédiatement après un refroidisseur d'air de suralimentation qui précède, ou bien après le papillon des gaz (D).

12. Véhicule automobile selon l'une quelconque des revendications 6 à 11, **caractérisé en ce qu'**un éjecteur (12) est disposé dans le circuit de fluide frigorigène (1).

13. Véhicule automobile selon la revendication 12, **caractérisé en ce que** l'éjecteur (12) est disposé, dans la première branche (6), devant l'évaporateur (9) du système de climatisation, et ledit éjecteur est relié à la deuxième branche (6') par une liaison (16) passant derrière l'évaporateur (9') d'air de suralimentation / de fluide frigorigène.
